# EUROPEAN PATENT SPECIFICATION

(11) **EP 4 249 903 B1**
(45) Date of publication and mention of the grant of the patent: **11.03.2026**
(21) Application number: 20962598.7
(22) Date of filing: 17.11.2020
(51) Int. Cl.: G01N 25/68, G01K 13/024

(54) **METHOD AND DEVICE FOR MEASURING DEW POINT**
VERFAHREN UND VORRICHTUNG ZUR TAUPUNKTMESSUNG
PROCÉDÉ ET DISPOSITIF DE MESURE DE TEMPÉRATURE DE POINT DE ROSÉE

(43) Date of publication of application: 27.09.2023
(73) Proprietor: Klimov, Andrei Aleksandrovich, Arkhangelskaya obl., 164902 (RU)
(72) Inventor: Klimov, Andrei Aleksandrovich, Arkhangelskaya obl., 164902 (RU)
(74) Representative: Weickmann & Weickmann PartmbB
(86) International application number: PCT/RU2020/000612
(87) International publication number: WO 2022/108469

(56) References cited:
- EP-B1- 0 829 008
- DE-A1- 102010 040 936
- DE-A1- 3 432 261
- SU-A1- 58 490
- US-A- 3 589 169

## Description

### TECHNICAL FIELD

The invention relates to a method for measuring the dew point temperature of wet gases (in particular air) and to the design of a device for carrying out said method and can be used in drying devices in pulp and paper, forestry, woodworking, food and other industries, in thermal power engineering and metallurgy for determining the dew point temperature of flue or blast furnace gases, blast furnace blast. The obtained dew point temperature value can be recalculated using known formulae to other units characterizing the water vapor content of the wet gas (or air). The apparatus may operate at a high moisture content of the analyzed gas and may determine a dew point temperature in the range of +45°C to +95°C that for air corresponds to a moisture content of 65 to 3000 g of water per 1 kg of dry air. The device can be used as a moisture content sensor of the drying agent in automated process control systems and in secondary heat recovery and recovery devices.

### BACKGROUND

A method for measuring the dew point temperature of a wet gas is known, which consists in measuring, with the aid of sensors, parameters that can lead to a moisture content of the gas and a gas pressure at the dew point temperature of the gas, sending information about the measured parameters to the electronic device, and recalculating these parameters into information on the moisture content of the gas. The parameters characterizing moisture and gas pressure are converted to dew point temperature (patent RU02186374). This method requires the use of several types of measurement sensors, which complicates the design and maintenance.

A method for measuring the dew point temperature of wet gas is known, which includes cooling the condensation surface, measuring its temperature, measuring the heat flow passing through the condensation surface, fixing the temperature at the time of the beginning of moisture condensation. Additionally, the temperature difference between the wet gas and the condensation surface is measured, the magnitude of the heat transfer coefficient at the boundary of gas and the condensation surface is determined, the condensation point is fixing on an abrupt change in the heat transfer coefficient (patent SU01728757 IPC G01N 25/68). This method requires the use of several types of measuring devices, and the process is carried out cyclically, which does not provide continuity of measurement.

A device for measuring the dew point temperature of a wet gas is known, comprising a tubular cooler with a water jacket, inside which in the gas flow there are turns of a resistance thermometer or a junctions of the thermopile, the second junctions of which or the second resistance thermometer are placed in the thermostat. The device contains a water-jet ejector, which serves to suck the gas under study from the working chamber (gas flue, gas duct, air duct). A test gas with a constant initial temperature is passed through a cold water cooled tubular cooler. As the wet gas moves through the cooled tube, its temperature drops sharply, and when the dew point temperature is reached, its further change slows down. At the portion of the tube where condensation of the water vapor contained in the gas occurs, the thermocouple or thermopile is placed and the dew point temperature corresponding to the current gas moisture content is obtained or automatically recorded using a galvanometer (patent SU00058490, prototype). The disadvantage of this method is the difficulty of determining the pipe section where the water vapor contained in the gas is condensed. In addition, as the moisture content changes, this portion shifts, resulting in distortion of the measurement results.

A method and apparatus for measuring dew point temperature of a moist gas is known, in which a flow of moist gas is passed over a surface; a moisture sensor is positioned in the flow of gas downstream of the surface; cooling is applied to the surface; the moisture content of the gas downstream of the surface is monitored; and the temperature of the surface is measured, the temperature which is measured being controlled by the detection of a decrease in moisture content due to moisture condensation from the moist gas at the dew point temperature. The surface may be a layer of heat-conducting material in contact with a heat pump or the surface may be part of the wall of a coiled tube (EP 0 829 008 B1 2002-07-31). The operation cycle of the device consists of a condensation phase, evaporation phase and a dry phase (EP 0 829 008 B1, Fig. 3). To provide the condensation phase it's necessary to cool the surface; to provide the evaporation phase it's necessary to heat the surface. Both cooling and heating takes certain time. It means that the method and apparatus do not provide continuous measurement of dew point temperature. The need to cool the condensation surface means that the device operates in the low dew point temperature range.

### SUMMARY OF THE INVENTION

The technical problem is to simplify the measurement method and design of the device, to reduce the number of types of sensors to one (only temperature sensors are required), to ensure continuity of measurement and to expand the range of measurement of the dew point temperature of wet gas.

The proposed method for measuring the dew point temperature of a wet gas consists in determining the point of abrupt change in the temperature gradient along the pipe being cooled, through which the gas under investigation is passed. The temperature at this point corresponds to the dew point temperature.

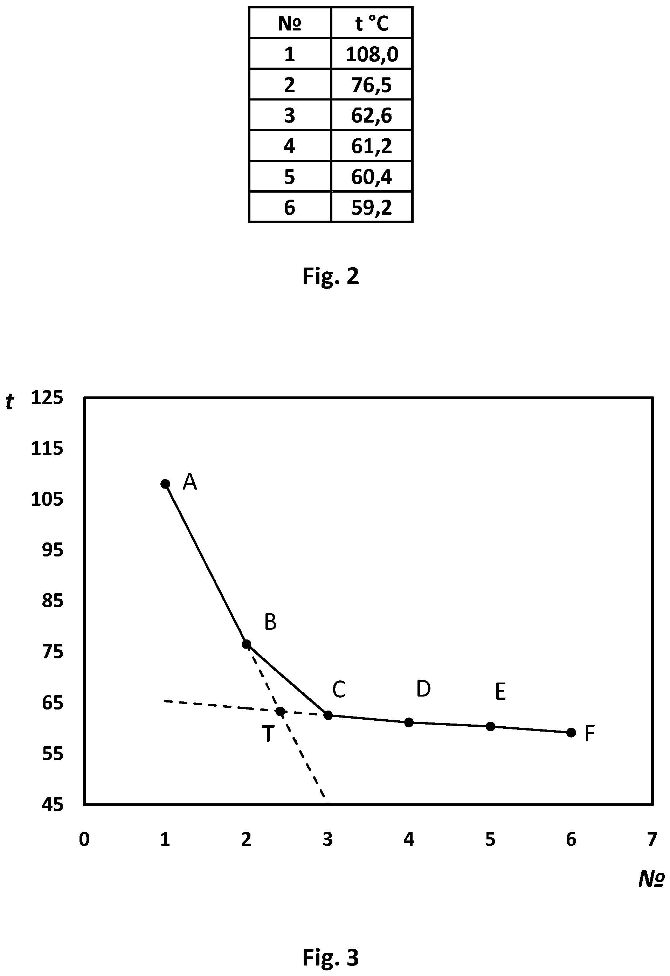

For this purpose, the investigated wet gas is continuously passed through a measuring device in the form of a tubular cooler with temperature sensors installed inside it in the gas flow. The tubular cooler is in an air environment, heat from it is removed by natural heat transfer to the ambient air. As the gas moves through the tubular cooler, the gas gradually cools down, reaches the dew point temperature, and continues to cool further. The number of sensors should be such that a graph similar to the graph shown in Fig. 3 can be reliably constructed. As shown in Fig. 3, there are at least four. The sensors measure the temperature of the gas at the points in which they are installed. The signals from the temperature sensors are directed to a microprocessor unit that calculates the temperature gradient along the length of the pipe and calculates the dew point temperature from the hopping temperature gradient along the tubular cooler. The dew point temperature may be recalculated using known formulas to other units of measurement, such as relative humidity, absolute humidity, moisture content. The tubular cooler may be made in the form of a spiral of several descending turns of the pipe, which makes the device more compact. The housing of the device containing the tubular cooler is outside the main process flow of wet gas, and the gas under investigation enters the cooler through the open end of the pipe located inside the working chamber (drying device, air duct, gas duct). To induce the flow of the gas, a vacuum pump is applied, which is connected to the outlet of the tubular cooler. Vacuum pumps may include, but are not limited to, air ejectors, jet pumps, mechanical vacuum pumps. The temperature sensors are mounted along the length of the pipe at some distances from one another. The distances between the sensors may be the same or not the same; the distances are taken into account when calculating the temperature gradient along the pipe. The tubular cooler in that part where the sensors are installed has no heat insulation or forced cooling and is in ambient air. The heat from the inside of the hot gas is transferred through the wall of the pipe to the environment. As the hot humid gas moves inside the cooler, its temperature decreases rapidly until moisture condensation starts, and when it reaches the dew point temperature, the cool down rate decreases abruptly. This is due to the fact that in the phase transition of water from a gaseous state to a liquid state, a significant amount of heat is released, which requires a longer section of the cooler to cool down the gas. A change in such parameters as the moisture content of the gas, its initial temperature, the rate of travel through the pipe, or the temperature of the ambient air causes shift of the point at which steam condensation begins, but this does not interfere with the performance of the measurements because the dew point temperature is determined from the hopping temperature gradient, and the dew point is not bound to the particular sensor. It is important that the condensation start point is within that section of the cooler where temperature sensors are installed. The temperature of the analyzed gas in front of the first temperature sensor must be above the dew point temperature of this gas by at least 20-30 °C. In cases where the temperature of the test gas is close to the dew point temperature, it is necessary to apply the gas heating before it is fed to the tubular cooler in order to avoid premature condensation of moisture in the pipe from the gas sampling point before entering the cooler and to provide the first part of the plot with rapid cooling of the gas without condensing the water vapor. The heater may be, for example, in the form of a pipe section with external heating.

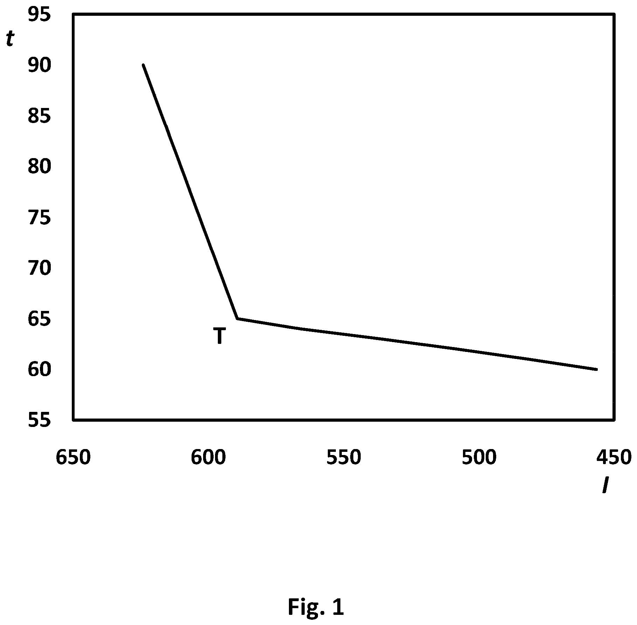

In order to more clearly explain the principle of measurement, a process for cooling humid hot air in graphical form (Fig. 1) is provided. The vertical axis indicates the humid air temperature; the horizontal axis indicates the enthalpy of wet air. On the horizontal axis, the inverse order of the values: the numbers decrease from left to right as the enthalpy of cooling decreases. The enthalpy values of humid air are calculated by the formula carried out in the manufacturing (practical) publication: Belskij A.P., Lotvinov M.D. Ventilyaciya bumagodelatelnyh mashin [Ventilation of Paper Machines]. Moscow, Lesnaya promyshlennost Publ., 1990. 216 p. Page 8 provides Formula (8) for calculation of humid air enthalpy.

By way of example, humid air is taken with content 200 g of water steam per kilogram of dry air, the dew point temperature of such air is approximately 65°C. At a temperature of 90°C enthalpy is 624 kJ/kg, at a temperature of 66°C 591 kJ/kg, enthalpy is reduced by 1.37 kJ/kg per degree of temperature reduction. Once the dew point temperature 65°C is reached, the water vapor becomes saturated and its condensation begins. Further cooling of the moist air is accompanied by a phase transition of the water from the gaseous state to the liquid state and release of a large amount of heat. At a temperature of 64°C enthalpy is 566 kJ/kg, at a temperature of 62°C 508 kJ/kg; enthalpy is reduced by 29 kJ/kg per degree of temperature reduction. This enthalpy change per degree of temperature reduction is 21 times greater than before the start of condensation. In the graph of Fig. 1, the fracture of the line at point T, which corresponds to the start of condensate dropping, is clearly visible.

The following data from the temperature sensors were obtained experimentally at the test device while continuously passing moist hot air through a spiral tubular cooler that was placed in the air at room temperature - the Table of Fig. 2. Based on the obtained data, a graph is plotted in the coordinates of the sensor number - temperature (Fig. 3). In this experiment, 6 temperature sensors are used, which on the graph correspond to numbers from 1 to 6 along the horizontal axis. The sensors were placed at equal distances from each other, so the sections 1-2, 2-3, 3-4, 4-5, 5-6 are equal to each other in the plot. The vertical axis denotes the temperature in °C. The obtained points are denoted by letters A, B, C, D, E, F. The segment AB corresponds to cooling the hot moist unsaturated air without water condensation; the segment has a significant slope to the horizontal axis. The segments CD, DE, EF correspond to the cooling of the wet saturated air with water condensation; the slope of these segments to the horizontal axis is much smaller. It is obvious that the point of the beginning of water condensation is between points B and C, at the intersection of the continuation of the segments AB and CD at point T. The coordinate of the point T along the vertical axis gives the dew point temperature of the test air; in this case it is 63.4 °C. If a large number of sensors are applied in the experiment, such as 50, then there will be 50 points in the graph and it will be similar to the graphics shown in Fig. 1. In practice, there is no need to use a large number of sensors. It is experimentally determined that no more than 8 sensors are required to accurately determine the fracture point of the graph and the corresponding dew point temperature. The technical result is achieved through the use of several similar temperature sensors distributed along the length of the tubular cooler and the continuity of the flow of the gas being analyzed.

### BRIEF DESCRIPTION OF THE DRAWINGS

Fig. 1 graphically illustrates a cooling process of wet air having a moisture content of 200 g/kg.
Fig. 2 shows a table of experimental data of the wet air cooling process, in the first column the sensor number, in the second column its temperature.
Fig. 3 illustrates experimental data of the wet air cooling process in graphical form in accordance with the data of the table of Fig. 2.
Fig. 4 schematically shows a best mode of carrying out the invention.

### BEST EMBODIMENT OF THE INVENTION

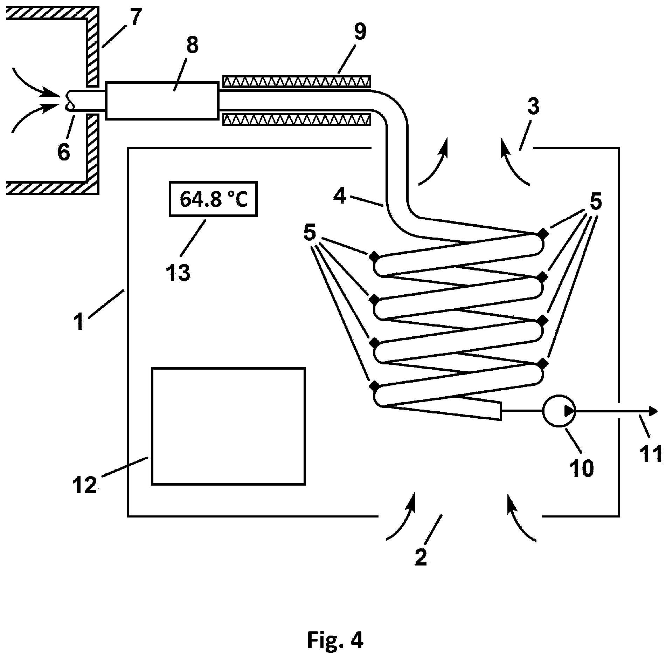

A best embodiment of the invention is shown in Fig. 4. The apparatus comprises a housing 1 in the form of a closed box. In the lower part of the housing there is a hole 2, in the upper part the hole 3 for free inlet and outlet of air, which cools the tubular cooler 4. Opening 2 in the housing 1 is located under the spiral of the cooler, the hole 3 is located above the spiral, the centers of the holes are on the vertical axis of the spiral. The shape of the holes may be different, for example, in the form of a circle, oval or polygon. The size of the holes 2 and 3 is approximately equal to the outer diameter of the spiral of the tubular cooler: for a circular hole with a diameter of 100-130 mm, for a polygonal hole the diameter of the circumscribed circle is 100-130 mm. Inside the housing there is a tubular cooler 4 in the form of a spiral of several turns of a thin-walled metal pipe with a diameter of approximately 15 mm, inside which at least four temperature sensors 5 are installed in the gas flow. The sensors can be fixed, for example, in protective sleeves. The type of temperature sensors may include, but is not limited to, thermoelectric, resistive, semiconductor. The outer diameter of the spiral from the tube is 100-130 mm; the intervals between the turns are approximately equal to the diameter of the tube. The distance between the temperature sensors along the length of the pipe can be from 150 to 400 mm. The gas to be analyzed enters the tubular cooler through the open end of the pipe 6. The flow rate of the gas at said pipe diameter can be in the range from 5 to 15 I/min. The inlet end of the pipe is located inside the drying chamber, or an air duct, or a gas duct, the outer wall of which is denoted by 7. The device may have a heater 8 at the inlet of the pipe to raise the temperature of the gas if necessary. The pipe from the heater 8 before entering the housing of the appliance 1 can have thermal insulation 9. At a high initial gas temperature, the need for a heater or heat insulation drops and they can be absent. In order to induce the flow rate of the gas to be analyzed, the vacuum pump 10 is connected to the outlet of the tubular cooler. Exhaust gas from the vacuum pump 10 is removed through the pipe 11 beyond the housing of the device. The temperature sensors 5 are connected to the microprocessor unit 12, which converts the signals from the temperature sensors into a digital form suitable for further processing, and calculates the dew point temperature and the parameters dependent on it (relative humidity, absolute humidity, moisture content). Microprocessor device 12 has an electrical output driver through which gas parameter information is transmitted to external systems. The device may be provided with a digital indicator 13 for displaying the calculated dew point temperature or other gas parameters.

### INDUSTRIAL APPLICABILITY

The method for measuring the dew point temperature and the device for its implementation can be used in the industry in processes that depend on the humidity of the gas, especially in cases where the dew point temperature is high, up to 95° C. Such processes include drying the materials: veneer, lumber, paper, cardboard, cellulose, food products, building materials. For example, veneer drying in plywood production is carried out at a drying agent moisture content of 200 to 400 g of water vapor per 1 kg of dry air, which corresponds to a dew point temperature of 65°C to 75°C and is in the middle of the operating range of the device. In the drying process, it is important to maintain optimal drying agent parameters, this increases product quality. The output from the device can be used in an automated drying process control system to control the moisture content of the drying agent. The apparatus can be used to determine the dew point temperature of the flue gases, which is important to prevent condensation in the chimney and to reduce corrosion.

## Claims

1. A device for measuring the dew point temperature of a wet gas, comprising a housing (1), a tubular cooler fixed in the housing in the form of a spiral from a pipe (4) with at least 4 temperature sensors (5) installed in the pipe in the flow of gas connected to a microprocessor device (12), wherein the gas to be analyzed enters the tubular cooler through an open end of the pipe (6); a vacuum pump (10) connected to an outlet of the tubular cooler, wherein the microprocessor device has an electrical output signal generator, and wherein the housing has an opening at the bottom (2) and an opening at the top (3).

2. The device according to claim 1, wherein the pipe from the open end of the pipe (6) before entering the housing of the device is provided with heat insulation (9).

3. The device according to claim 1, wherein the pipe is provided with an analyzed gas heater (8).

4. The device according to claim 1, wherein it comprises a digital indicator (13).

5. The device according to claim 2, wherein the pipe is provided with the analyzed gas heater (8).

6. The device according to claim 2, wherein it comprises a digital indicator (13).

7. The device according to claim 3, wherein it comprises a digital indicator (13).

8. The device according to claim 5, wherein it comprises a digital indicator (13).

## Patentansprüche

1. Vorrichtung zum Messen der Taupunkttemperatur eines feuchten Gases, umfassend ein Gehäuse (1), einen in dem Gehäuse fixierten Röhrenkühler in der Form einer Spiralform aus einem Rohr (4) mit wenigstens 4 Temperatursensoren (5), welche in dem Rohr in der Strömung von Gas installiert sind, verbunden mit einer Mikroprozessorvorrichtung (12), wobei das zu analysierende Gas durch ein offenes Ende des Rohrs (6) in den Röhrenkühler eintritt; eine Vakuumpumpe (10), welche mit einem Auslass des Röhrenkühlers verbunden ist, wobei die Mikroprozessorvorrichtung einen Generator für ein elektrisches Ausgangssignal aufweist und wobei das Gehäuse eine Öffnung an der Unterseite (2) und eine Öffnung an der Oberseite (3) aufweist.

2. Vorrichtung nach Anspruch 1, wobei das Rohr von dem offenen Ende des Rohrs (6) vor einem Eintreten in das Gehäuse der Vorrichtung mit einer Wärmeisolierung (9) bereitgestellt ist.

3. Vorrichtung nach Anspruch 1, wobei das Rohr mit einer Heizeinrichtung (8) für das zu analysierende Gas bereitgestellt ist.

4. Vorrichtung nach Anspruch 1, wobei sie eine digitale Anzeige (13) umfasst.

5. Vorrichtung nach Anspruch 2, wobei das Rohr mit der Heizeinrichtung (8) für das zu analysierende Gas bereitgestellt ist.

6. Vorrichtung nach Anspruch 2, wobei sie eine digitale Anzeige (13) umfasst.

7. Vorrichtung nach Anspruch 3, wobei sie eine digitale Anzeige (13) umfasst

8. Vorrichtung nach Anspruch 5, wobei sie eine digitale Anzeige (13) umfasst.

## Revendications

1. Un dispositif pour mesurer la température du point de rosée d'un gaz humide, comprenant un boîtier (1), un refroidisseur tubulaire fixé dans le boîtier sous la forme d'une spirale à partir d'un tuyau (4) avec au moins 4 capteurs de température (5) installés dans le tuyau dans le flux de gaz relié à un dispositif à microprocesseur (12), dans lequel le gaz à analyser pénètre dans le refroidisseur tubulaire par une extrémité ouverte du tuyau (6) ; une pompe à vide (10) reliée à une sortie du refroidisseur tubulaire, dans lequel le dispositif à microprocesseur comporte un générateur de signal de sortie électrique, et dans lequel le boîtier comporte une ouverture dans sa partie inférieure (2) et une ouverture dans sa partie supérieure (3).

2. Le dispositif selon la revendication 1, dans lequel le tuyau provenant de l'extrémité ouverte du tuyau (6) avant d'entrer dans le boîtier du dispositif est muni d'une isolation thermique (9).

3. Le dispositif selon la revendication 1, dans lequel le tuyau est muni d'un réchauffeur de gaz analysé (8).

4. Le dispositif selon la revendication 1, dans lequel il comprend un indicateur numérique (13).

5. Le dispositif selon la revendication 2, dans lequel le tuyau est muni du réchauffeur de gaz analysé (8).

6. Le dispositif selon la revendication 2, dans lequel il comprend un indicateur numérique (13).

7. Le dispositif selon la revendication 3, dans lequel il comprend un indicateur numérique (13).

8. Le dispositif selon la revendication 5, dans lequel il comprend un indicateur numérique (13).
